# EUROPEAN PATENT SPECIFICATION

(11) **EP 4 190 700 B1**
(45) Date of publication and mention of the grant of the patent: **27.03.2024**
(21) Application number: 21212374.9
(22) Date of filing: 03.12.2021
(51) Int. Cl.: B64D 45/00, B64D 43/00, G09B 9/46, B64C 27/04, B64C 29/00, G01C 23/00

(54) **CONTROL UNIT FOR AN AIRCRAFT CAPABLE OF HOVERING OR FOR A FLIGHT SIMULATION SYSTEM OF SAID AIRCRAFT, AND RELATIVE METHOD FOR ASSISTING THE PERFORMANCE OF A MANOEUVRE**
STEUEREINHEIT FÜR EIN SCHWEBEFÄHIGES FLUGZEUG ODER FÜR EIN FLUGSIMULATIONSSYSTEM EINES SOLCHEN FLUGZEUGS UND ENTSPRECHENDES VERFAHREN ZUR UNTERSTÜTZUNG BEI DER DURCHFÜHRUNG EINES MANÖVERS
UNITÉ DE COMMANDE POUR UN AÉRONEF CAPABLE DE VOL STATIONNAIRE OU POUR UN SYSTÈME DE SIMULATION DE VOL DUDIT AÉRONEF ET PROCÉDÉ ASSOCIÉ POUR FACILITER UNE MANOEUVRE

(43) Date of publication of application: 07.06.2023
(73) Proprietor: Leonardo S.p.a., 00195 Roma (IT)
(72) Inventor: MONTORFANO, Marco, 21017 SAMARATE (VA) (IT); BALDUSSI, Antonio, 21017 SAMARATE (VA) (IT); FRATTINI, Tiziano, 21017 SAMARATE (VA) (IT); CASSESE, Stefano, 21017 SAMARATE (VA) (IT); SCOLA, Alessandro, 21017 SAMARATE (VA) (IT)
(74) Representative: Studio Torta S.p.A.

(56) References cited:
- DE-A1- 4 140 943
- KR-A- 20130 012 727
- US-A- 4 247 843
- US-A1- 2014 242 553
- US-A1- 2019 220 152
- US-A1- 2021 086 911
- US-A1- 2021 114 723

## Description

The present invention relates to a control unit for an aircraft capable of hovering or for a flight simulation system of such an aircraft.

The present invention relates, moreover, to a method for assisting the performance of a manoeuvre for the aforesaid aircraft capable of hovering or a flight simulation system of such an aircraft.

Helicopters comprise, in a known way, an engine system, a main rotor which is driven by the engine system, has a plurality of blades, and is adapted to provide the lift necessary to sustain the helicopter itself and the thrust necessary for the directional control of the helicopter itself.

The tilt-rotor aircrafts comprise, as known:
- a fuselage extended along a first longitudinal axis;
- a fixed wing extended along a second transversal axis of the tilt-rotor aircraft and tilted with respect to the first longitudinal axis; and
- a pair of rotors rotatable about respective third axes and which can be tilted with respect to the second axis.

The tilt-rotor aircraft can be switched between:
- an airplane configuration, wherein the rotors have the respective third axes parallel to the first axis; and
- a helicopter configuration, wherein the rotors have the respective third rotation axes tilted with respect to the first axis.

In the airplane configuration, the rotors behave as the traditional propellers of an airplane and generate the thrust required to sustain the airplane itself. In such a configuration, the lift required to sustain the airplane is provided by the fixed wing.

In the helicopter configuration, the rotors provide either the lift required to sustain it or the thrust required to the manoeuvrability of the tilt-rotor aircraft along the aforesaid first and second axis.

Helicopters and tilt-rotor aircrafts arranged in the helicopter configuration have a characteristic velocity not to be exceeded during the flight, known as Velocity to never exceed, hereinafter referred to as the velocity VNE.

This velocity VNE is characteristic of each helicopter/tilt-rotor aircraft and is determined either from aerodynamic limits such as the stall of the receding blade and the need to avoid a transonic flow on the advancing blade, or from structural limits, such as the need not to generate excessive loads on the shaft and hub of the main rotor.

The velocity VNE is determined through design evaluation and flight experiments, and depends on numerous parameters characteristic of the flight conditions and the aircraft itself. The most relevant parameters are air temperature, altitude and weight.

In other words, the velocity VNE defines a limit to the flight envelope of the aircraft, i.e. to the value of maximum velocity at which the aircraft can operate at respective altitudes.

Aircrafts capable of hovering of known type comprise an instrument which provides the pilot with an indication of this velocity VNE, as the flight conditions of the aircraft vary.

Hovering aircrafts of known type are moreover characterized by a further parameter known as maximum velocity and referred to below as the velocity Vmax.

The velocity Vmax which is generally lower than the velocity VNE is determined by the use of special equipment, such as the opening of the hatches or the use of a transport hook, which limits the maximum velocity of the helicopter.

The velocities Vmax relative to the use of the aforesaid equipment are normally indicated in the flight manual.

Therefore, in case of actuation of the aforesaid equipment, the pilot keeps the aircraft at a velocity lower than the corresponding velocity Vmax.

There is a perceived need in the industry to provide the pilot with a clear indication of the velocity Vmax in the different operating conditions of the aircraft capable of hovering, in order to reduce his workload.

CN-B-108045589 describes a method for generating an alarm in case the hovering aircraft exceeds the velocity Vne, which is also evaluated based on the weight of the aircraft.

JP-B-2710764 describes a method for calculating the velocity Vne based also on the actual weight of the aircraft.

KR-A-20130012727 discloses a control unit for an aircraft capable of hovering or for a flight simulation system of such an aircraft according to the preamble of claim 1 and a method for assisting the performance of a manoeuvre by means of an aircraft configured to be able to hover, or for a flight simulation system of such an aircraft according to the preamble of claim 10.

DE-A-4140943 discloses an instrument with a computation and display unit which determines the actual and maximum permissible flight speeds depending on measurement data, and compares them with each other. A double-pointer instrument is used to display both analogue values simultaneously. It contains a comparator which instigates a visual and/or audible warning signal when the maximum permissible flight speed is exceeded. In this way, the instruments prevents maximum permissible flight speed from being exceeded without being noticed and hence reduces risk of flight critical situations developing.

US-A-2019/220152 discloses a method for providing flight data onboard an aircraft is provided. The method obtains avionics data, by a processor communicatively coupled to a display device onboard the aircraft; presents a graphical user interface (GUI), by the display device, wherein the GUI comprises at least a speed tape graphical element and an altitude tape graphical element; receives user input manipulations via a user interface communicatively coupled to the processor; executes the user input manipulations for the altitude tape graphical element or the speed tape graphical element, to generate a revised altitude tape graphical element or a revised speed tape graphical element; generates a revised GUI comprising the revised altitude tape graphical element or the revised speed tape graphical element; and presents the revised GUI, via the display device.

Aim of the present invention is to realize a control unit for an aircraft capable of hovering or for a flight simulation system of said aircraft.

According to the invention, this aim is achieved by a control unit for an aircraft capable of hovering or for a flight simulation system of such an aircraft as claimed in Claim 1.

The present invention also relates to a method for assisting the performance of a manoeuvre by means of an aircraft configured to be able to hover, or for a flight simulation system of such an aircraft as claimed in Claim 10.

An embodiment is described below for a better understanding of the present invention, provided by way of non-limiting example with reference to the accompanying drawings, wherein:
- Figure 1 is a perspective view of an aircraft capable of hovering incorporating a control unit according to the invention;
- Figure 2 is a schematic view of the control unit of Figure 1;

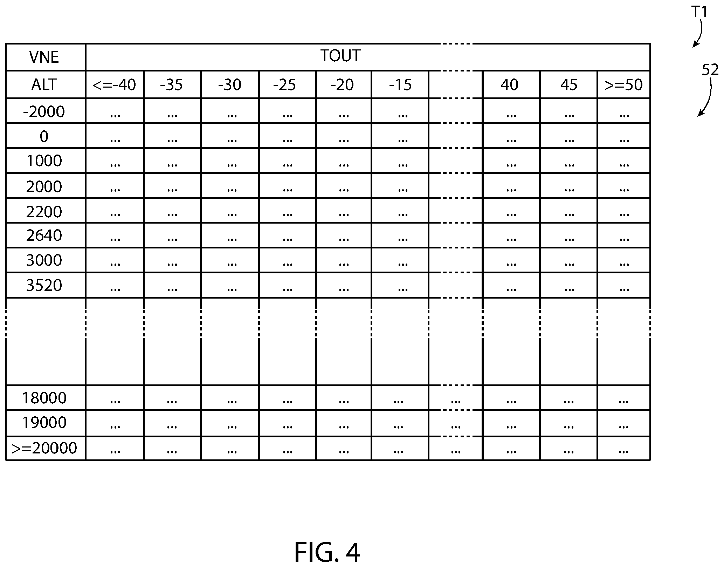

- Figures 3 and 4 are schematic views of some stages of the control unit of Figures 1 and 2;
- Figure 5 is a front view on a greatly enlarged scale of an indicator;
- Figures 6 and 7 show respective details of an interface of the control unit according to the invention; and
- Figure 8 schematically shows a flight simulation system of the aircraft of Figure 1 incorporating a control unit according to the invention.

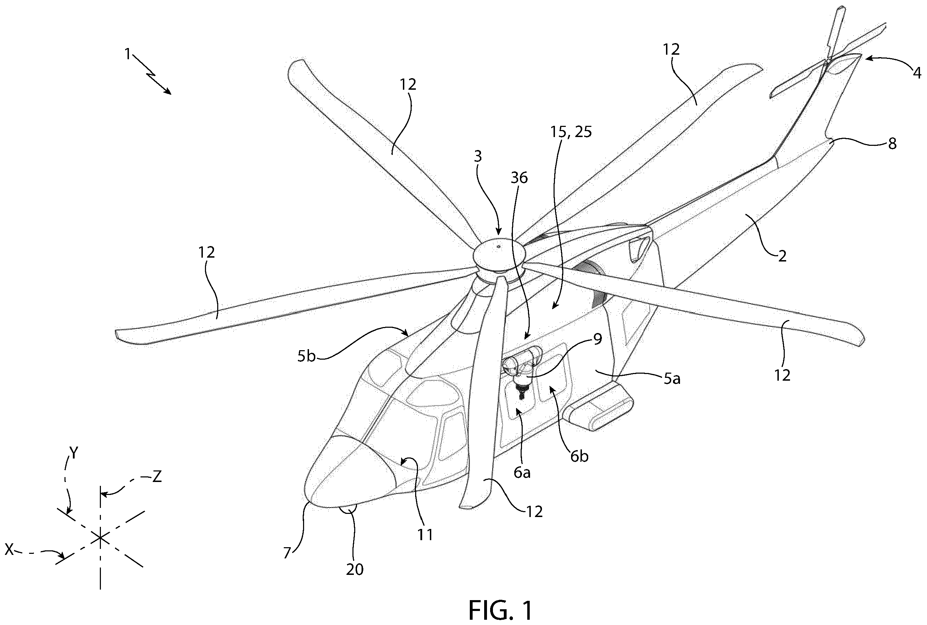

With reference to the Figure 1, an aircraft is shown which is capable of hovering, that is, of keeping flying at constant height and at zero velocity.

The aircraft is, in the case shown, a helicopter referred to hereinbelow under reference number 1.

Alternatively, the aircraft could be a tilt-rotor aircraft or a drone/UAV.

With reference to Figure 1, 1 denotes in particular a helicopter essentially comprising:
- a fuselage 2 defining a cockpit 11;
- a main rotor 3 placed at a top of the fuselage 2, having a plurality of blades 12 and which is rotatable around a first axis; and
- an anti-torque rotor 4 placed at one tail end of the fuselage 2 and rotatable around its own second axis transversal to the first axis.

In greater detail, the fuselage 2 comprises a pair of lateral sides 5a, 5b defining respective hatches 6a, 6b for accessing the fuselage 2.

The fuselage 2 further comprises a nose 7 and a tail 8.

It is possible to identify a longitudinal axis X of the helicopter 1 directed from the nose 7 to the tail 8 and a transverse axis Y of the helicopter 1. The axis Y is orthogonal to the axis X and arranged horizontally when the helicopter 1 is on the ground or in a normal flight configuration.

It is also possible to identify an axis Z orthogonal to the axes X, Y and arranged vertically, when the helicopter 1 is on the ground or in a normal flight configuration.

The helicopter 1 further comprises a plurality of devices 15 selectively operable in respective operating configurations.

Non-limiting examples of such devices 15 are:
- a plurality of retractable landing gears 20; and
- a plurality of hatches for accessing the fuselage 2, which can be selectively arranged in an open or closed configuration.

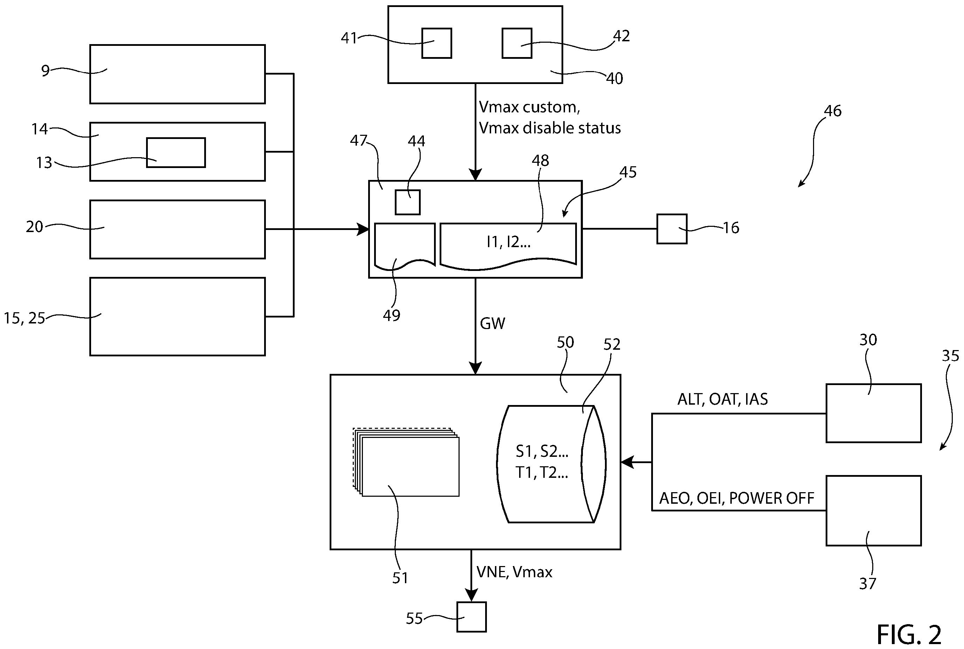

The helicopter 1 further comprises, in some embodiments, a plurality of optional kits 25 (only schematically indicated in Figure 2), which may be selectively installed and/or selectively operable in respective operating configurations.

Non-limiting examples of such kits 25 are: - a device 9 for transporting a load, comprising a winch, a liftable/lowerable cable and a recovery basket or a harness or a stretcher; - a hook adapted to allow a load to be transported at a constant distance from the fuselage 2, without allowing it to be raised/lowered with respect to the fuselage 2; and
- optical sensors, infrared sensors, electro-optical/infrared sensors e.g. of FLIR type, search lights. In the case shown in Figure 1, the transport device 9 is adapted to allow the load to be lifted on board the fuselage 2 or the load to be lowered towards the ground.

The helicopter 1 is characterized by a value of forward velocity to never exceed under any operating condition, hereinafter referred to as velocity VNE.

The velocity VNE is determined from numerous parameters, such as, for example, the need to avoid the stall of the receding blades 12 of the rotor 3, to avoid the establishment of a transonic flow at the advancing blades 12 of the rotor 3 or the need not to exceed a determined level of loads on the rotor 3 itself.

The helicopter 1 further comprises:
- a tank 13;
- a fuel management system 14 which is capable of providing an indication of the quantity of fuel present in the tank 13; and
- a sensor 16 adapted to detect the weight on the gears 20 and to generate a signal representative of the fact that the helicopter 1 is on the ground.

The helicopter 1 is moreover characterized by a value of maximum forward velocity, hereinafter referred to as the velocity Vmax. The velocity Vmax corresponds to the minimum value of the maximum velocities permitted to the helicopter 1, when one or more of the devices 15 is arranged in the respective operating configuration and/or one or more of the kits 25 is installed or arranged in the respective operating configuration

In other words, the actuation in the operating configuration of one or more devices 15, the installation of one or more kits 25 and/or the actuation in the operating configuration of one or more devices 15/kits 25 themselves impose a reduction of the maximum velocity of the helicopter 1 from the velocity VNE to the velocity Vmax, if the velocity VNE is greater than the velocity Vmax.

For example, the use of the load device 9 requires a reduction of the maximum operating velocity of the helicopter 1 from the velocity VNE to the velocity Vmax. The helicopter 1 further comprises:
- a plurality of sensors 30 adapted to detect the flight parameters of the helicopter 1, such as for example the altitude ALT, the outside air temperature OAT and the indicated velocity IAS; and
- a propulsion system 35 adapted to drive the main rotor 3 and the auxiliary devices of the helicopter 1.

In the embodiment shown, the propulsion system 35 comprises at least one pair of turbines 36.

The propulsion system 35 further comprises a control unit 37 programmed to control the turbines 36.

The control unit 37 is programmed to provide, at output:
- a signal AEO if all turbines 36 are operational;
- a signal EIO if one of the turbines 36 is deactivated; and
- a signal Power off if the propulsion system 35 is deactivated.

Alternatively, the propulsion system 35 comprises a single turbine 36.

In such a case, the control unit 37 is programmed to provide, at output:
- the signal AEO if the turbine 36 is deactivated; and
- the signal Power off if the propulsion system 35 is deactivated.

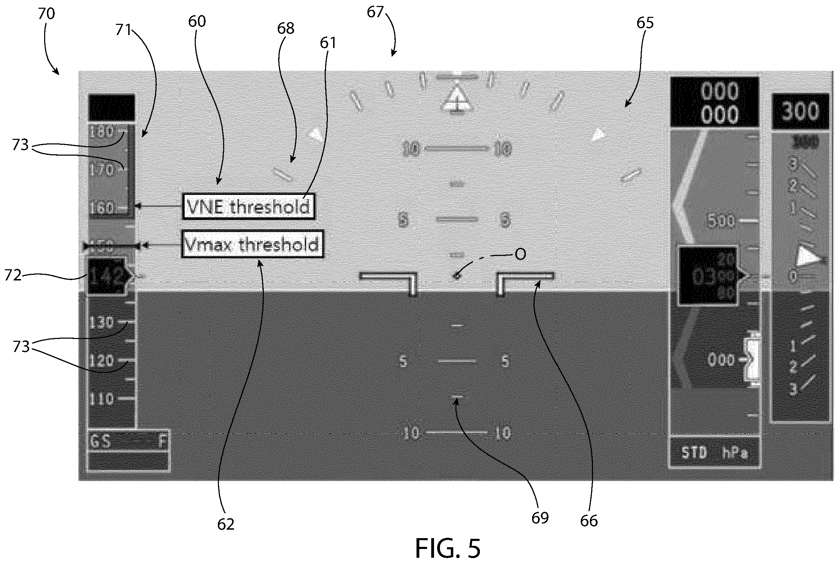

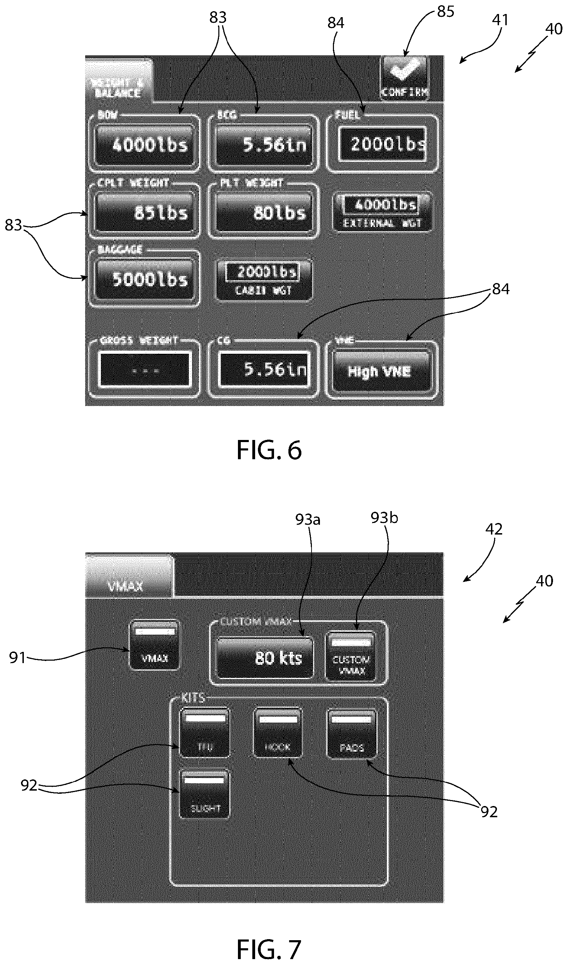

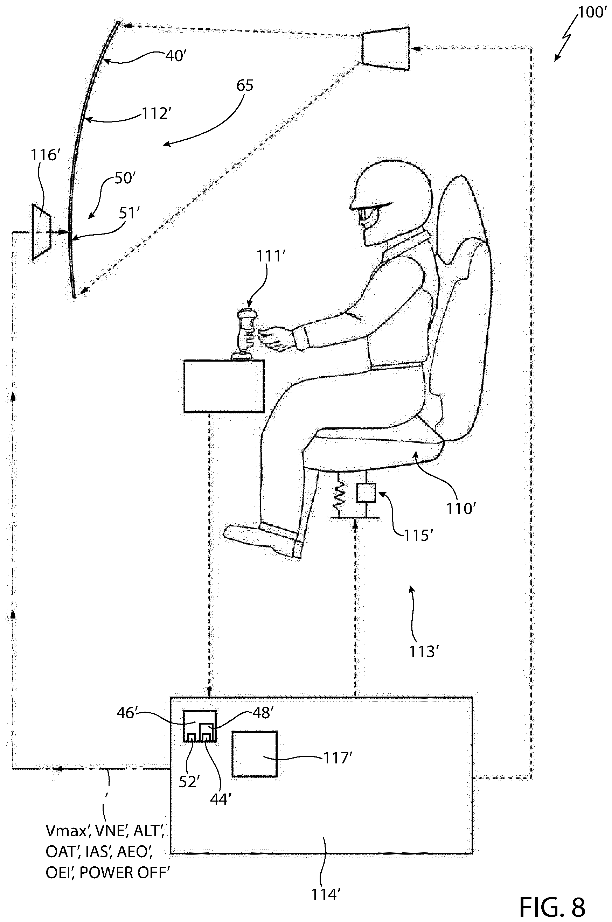

The helicopter 1 further comprises (Figure 2):
- an interface 40 (only schematically shown in Figures 7 and 8) that can be actuated by the pilot to enter information and/or data;
- a control computer 45 of the helicopter 1 commonly referred to as "Aircraft Management Computer"; and
- a system 50 for displaying flight information and parameters to the pilot inside the cockpit 11 (shown in Figures 5 and 6).

The interface 40 is electrically interfaced with the control unit 45.

The interface 40 is configured to allow the crew to enter a plurality of data associated with an actual weight GW of the helicopter 1.

In the case shown, the interface 40 comprises a display, for example of the touch-screen type. Alternatively, the interface 40 could comprise a multifunction control and display unit known as MDCU or any panel that allows the crew to enter data and/or information.

The control unit 45 is electrically interfaced with the interface 40, the display system 50, the devices 15/kits 25 and the fuel management system 14.

The display system 50 is electrically connected with the control unit 45, the sensors 30 and the control unit 37.

The control unit 45 is also programmed to receive at input the information entered by the crew in the interface 40.

The display system 50 comprises, in turn, a plurality of display devices 51 preferably arranged in the cockpit 11.

The display device 51 is programmed to receive at input:
- the signals ALT, IAS/CAS, OAT detected by the sensors 30; and
- the signals AEO, OEI, Power off generated by the control unit 37.

The helicopter 1 also comprises a processing system 46 programmed to evaluate the value of the velocity VNE.

It is important to underline that the processing system 46 is distributed between the interface 40, the control unit 45 and the display system 50, i.e. it comprises a plurality of steps arranged within the interface 40, the control unit 45 and the display system 50, as will become clear from the remainder of the present description.

The processing system 46 is programmed to process:
- a signal associated with the actual weight GW of the helicopter 1 and to associate a plurality of tables T1, T2, .. , Tn to respective intervals I1, I2, .., Ij of values of the actual weight GW; each said table T1, T2, T1, .. , Tn associating a plurality of values of the velocity VNE to respective signals ALT, OAT; and
- a value of velocity Vne, based on the table T1, T2, .. , Tn associated to the actual weight GW and to the respective signals ALT, OAT.

Preferably, the processing system 46 is programmed to:
- generate j intervals I1, 12, .. Ij of values of the actual weight GW of the helicopter 1; and
- associate to each interval I1, 12, .. , Ij, a set S1, S2, .. Sj of i tables T1, T2, .. Ti.

Each table T1, T2, .. Ti of the same set S1, S2, .. Sj associated to a predetermined interval I1, 12, .. , Ij also corresponds to a respective AEI, OEI, Power off condition of the propulsion system 35.

In other words, the number of tables T1, T2, .. Tn is equal to n= ixj where j is the number of intervals I1, 12, .. Ij and i is the number of AEI, OEI, Power off conditions.

In more detail, the processing system 46 comprises:
- a storage step 44 wherein a plurality of velocity profiles High_VNE, Medium_VNE, Low_VNE associated with respective intervals I1, 12, .., Ij of value of the actual weight GW are stored;
- a processing stage 48 programmed to process the actual weight GW also based on the data entered in the interface 40; and
- a further storage stage 52 wherein the tables T1, T2, .. Tn associated to respective velocity profiles High_VNE, Medium_VNE, Low_VNE are stored.

In more detail, the storage stage 52 is programmed to:
- associate to each velocity profile High_Vne, Medium_Vne, Low_Vne a set of tables T1, T2, .. Ti; and
- select within the set of tables T1, T2, .. Ti the table associated with the AEO, OEI, Power off condition; and
- use the selected table T1, T2, .. Ti to evaluate the value of velocity VNE.

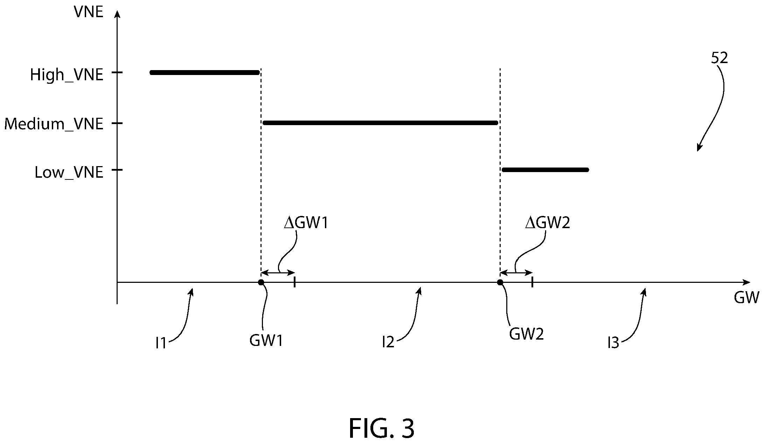

With particular reference to Figure 3, the values of velocity Vne of the velocity profile High_VNE are greater than those of the velocity profile Medium_VNE.

The velocity values of velocity Medium_VNE are greater than those of the velocity profile Low_VNE.

The values of the actual weight GW in the interval I2 are greater than the values of the actual weight GW in the interval I1. The values of the actual weight GW in the interval I3 are greater than in the interval I2.

The processing stage 48 is programmed to use the velocity profile Low_VNE associated to the interval I3 with maximum values of the actual weight GW as the default velocity profile.

Preferably, the interval I1 comprises values of the actual weight that are lower than GW1, the interval I2 comprises values of the actual weight ranging between GW1 and GW2, and the interval I3 comprises values of the actual weight that are greater than GW2.

Even more preferably, the interval I1 comprises values of the actual weight that are lower than GW1-ΔGW1, the interval I2 comprises values of the actual weight ranging between GW1-ΔGW1 and GW2-ΔGW2, the interval I3 comprises values greater than GW2-ΔGW2, wherein ΔGW1, ΔGW2 are configurable values to take into account any uncertainties on the quantity of fuel present in the tank 13.

Even more preferably, the processing stage 48 is programmed to process the velocity profile High_VNE, Medium_VNE, Low_VNE after the actual weight GW is maintained in the relative interval I1, I2, .., Ij for a predetermined selectively settable time interval PT, to take into account the contribution of manoeuvres at a high angle of inclination of the helicopter 1 with respect to the horizon.

In particular, the values PT, ΔGW1, ΔGW2 can be set within the processing stage 48.

The processing stage 48 is programmed to receive from the system 14 the value of the quantity of fuel in the tank 13 and to calculate the actual weight GW also based on this quantity.

More precisely, the processing stage 48 is programmed to calculate the actual weight GW based on the data entered by the crew in the interface 40 and based on the quantity of fuel present in the tank 13.

The processing stage 48 is, moreover, programmed to acquire from the interface 40 a confirmation signal CONFIRM STATUS enabling the calculation of the velocity VNE based on the actual weight GW.

This signal CONFIRM STATUS can assume either a TRUE or FALSE value, depending on whether velocity VNE processing based on the actual weight GW is enabled or disabled, respectively.

In particular, the processing stage 48 is programmed to transmit to the display device 50:
- in the case in which the signal CONFIRM STATUS assumes TRUE value, the velocity profile High_VNE, Medium_VNE, Low_VNE processed by the processing stage 48 itself; and
- in the case in which the signal CONFIRM STATUS assumes FALSE value, the default velocity profile Low_VNE.

The processing stage 48 is, moreover, programmed to transmit the default profile Low_VNE to the display device 50, in the case in which the sensor 16 detects that the helicopter 1 is on the ground.

In other words, the processing stage 48 performs a reset cycle, in the case in which the sensor 16 detects that the helicopter 1 is on the ground.

The processing stage 48 is also programmed to transmit to the interface 40: the total weight of the fuel present in the tank 13, the actual weight GW and the processed profile High_VNE, Medium_VNE, Low_VNE.

In the case shown, the velocity profiles High_VNE, Medium_VNE, Low_VNE, the intervals I1, I2, .. Ij and the sets S1, S2, .. Si are three in number.

Consequently, the tables T1, T2, .. , Tn are nine in number.

Advantageously, the processing system 46 is, moreover, programmed to evaluate the value of the velocity Vmax.

In greater detail, the storage stage 47 has in its memory a file 49 wherein the installed kits 25 and the relative operating configurations and the operating configurations of the devices 15 are indicated.

The processing stage 48 is programmed to acquire from the interface 40:
- a confirmation signal VMAX DISABLE STATUS enabling or disabling the calculation of the velocity Vmax;
- a plurality of signals relative to the configuration of the devices 15/kits 25; and
- a signal relative to a velocity Vmaxcustom selectable by the crew and different from the velocity Vmax.

This signal VMAX DISABLE STATUS can assume TRUE or FALSE value in the case of disabling or enabling the calculation of the velocity Vmax, respectively.

The processing stage 48 is programmed to process as value of velocity Vmax the minimum value of the values of the velocity Vmax that are associated with respective devices 15/kits 25 installed on the helicopter 1 and with the relative operating conditions.

Preferably, the processing stage 48 is programmed to process as velocity Vmax the smaller between the aforesaid minimum value and the velocity Vmaxcustom.

The control unit 45 is also programmed to:
- not to consider in the calculation of the velocity Vmax the kits 25 present in the file 49 but declared as uninstalled or temporarily disabled via the interface 40; and/or
- consider as Vmax the value Vmax custom that can be entered in the interface 40, if it is lower than the lowest of the velocities Vmax associated with the configurations of the devices 15 and kits 25, and with the installed kits 25.

The storage stage 47 comprises a further table TX within which a plurality of values of the velocity Vmax associated with respective devices 15/kits 25 installed on the helicopter 1 and relative conditions indicated in the file 49 are stored.

The processing stage 48 is also programmed to transmit the value of velocity Vmax to the display device 50 either in the case in which the signal CONFIRM STATUS assumes TRUE value or in the case in which it assumes FALSE value.

The processing stage 48 is, moreover, programmed to interrupt the calculation of the velocity Vmax in the case in which the signal VMAX DISABLE STATUS assumes TRUE value.

The processing system 46 is programmed to display on an indicator 65 of the display device 51:
- an indication 60 representative of the value of velocity VNE; and/or
- an indication 61 representative of the value of velocity Vmax.

The processing system 46 comprises, moreover, a generator 55 programmed to generate inside the cockpit 11:
- a first acoustic alarm signal, if the actual velocity IAS of the helicopter 1 is greater than a predetermined rate of the velocity VNE; and/or
- a second acoustic alarm signal, if the actual velocity IAS of the helicopter 1 is greater than a predetermined rate of the velocity Vmax.

The display device 50 acquires from the control unit 45:
- the velocity profile High_VNE, Medium_VNE, Low_VNE processed by the processing stage 48; and
- the value of velocity Vmax evaluated by the processing stage 46.

The display device 51 of the display system 50 is programmed, in the case in which a signal VMAX DISABLE STATUS assumes TRUE value, to:
- display the value of velocity VNE;
- display a status message Check GW-VNE if the processing stage 46 processes the default velocity profile Low_VNE; and
- reset the status message Check GW-VNE if the processing stage 46 processes a velocity profile other than the default velocity profile Low_VNE.
   The display device 51 of the display system 50 is programmed, in the case in which the signal VMAX DISABLE STATUS assumes FALSE value, to
- display either the value of velocity VNE or the value of velocity Vmax, if the value of velocity VNE is greater than the velocity Vmax; or
- display only the value of velocity VNE, if the value of velocity VNE is lower than or equal to the value of the velocity Vmax.

The display device 51 of the display system 50 is programmed, in the case in which a signal VMAX DISABLE STATUS assumes TRUE value, to:
- display the status message Check GW-VNE if the processing stage 46 processes the default velocity profile Low_VNE; and
- reset the status message Check GW-VNE if the processing stage 46 processes a velocity profile other than the default velocity profile Low_VNE.

In the case in which the storage stage 52 does not receive or has lost the velocity profile High_VNE, Medium_VNE, Low_VNE processed by the processing stage 48 or in the case in which it receives an invalid velocity profile High_VNE, Medium_VNE, Low_VNE, a first malfunction condition is generated.

In this first malfunction condition, the storage stage 52 is programmed to:
- select the set S1, S2 .. Sj corresponding to the default velocity profile Low_VNE;
- select the table T1, T2, .., Ti of the selected set corresponding to the AEO, OEI, Power off condition; and
- select the value of velocity VNE from the table T1, T2, .. , Tn selected, based on the signals ALT, OAT.

In this first malfunction condition, the display device 51 of the display system 50 is configured to display the value of velocity VNE and the message "Default VNE - invalid data".

In the case in which the display system 50 does not receive or has lost the value of velocity Vmax or in the case in which it receives an invalid value of velocity Vmax, a second malfunction condition is generated.

Upon the occurrence of this second malfunction condition, the display device 51 of the display system 50 is programmed to:
- remove the indication of the velocity Vmax; and
- display the message "No Vmax - invalid data".

The display system 50 acquires from the sensors 30 the actual value of velocity of the helicopter IAS and is programmed to transmit this value to the generator 55 in the case in which the actual velocity signal IAS exceeds the signals of velocity VNE or Vmax.

In the case shown, the processing stage 48 is carried by the control unit 45.

The storage stage 52 is carried by the display device 50.

The generator 55 is arranged inside the control unit 45.

The display device 51 comprises an indicator 65 known as the Attitude and Direction Indicator "ADI".

The indicator 65 integrates the functions of attitude indicator or "artificial horizon", and of "Flight Director" i.e. it provides a representation of the optimal flight trajectory in order to maintain a desired flight path.

In greater detail, the indicator 65 comprises (Figure 5):
- an indication 66 representative of the reference of the helicopter 1; and
- a circular area 67 with centre O and rotatable about the centre O with respect to the indication 66, based on the angle of inclination of the helicopter 1 with respect to the axis X or longitudinal axis of the aircraft, i.e. the roll angle of the helicopter 1 itself.

The area 67 further comprises:
- an angular graduated scale 68, associated with the angle between the axis Y of the helicopter 1 and a fixed direction, based on the rotation of the helicopter with respect to its longitudinal axis, i.e. to the roll angle of the helicopter 1; and
- a linear scale 69 associated with the angle between the axis X of the helicopter 1 and a fixed direction, based on the rotation of the helicopter with respect to its lateral axis, i.e. to the pitch angle of the helicopter 1.

The position of the indication 66 on the scales 68 and 69 is representative of the respective roll and pitch angles of the helicopter 1.

The indicator 65 further comprises:
- an indication 70 of the forward velocity measured in an air reference system IAS of the helicopter 1, hereinafter referred to as the actual forward velocity;
- a graduated scale 71 on which a plurality of notches 73 associated with respective values of actual forward velocity IAS of the helicopter 1 are shown; and
- a hand 72 superimposed on the graduated scale 71, which moves vertically, so that the hand 72 is superimposed on the notch 73 corresponding to the respective instantaneous value of actual forward velocity IAS.

The indications 61 and 62 are shown on the graduated scale 71 at the respective notches 73 corresponding to the velocity VNE and to the velocity Vmax, respectively.

Preferably, the indications 61, 62 are formed by respective labels "VNE Threshold" and "Vmax threshold".

With reference to Figures 6 and 7, the interface 40 allows the crew to enter the data necessary to calculate the actual weight GW and to calculate the velocity Vmax. In more detail, the interface 40 comprises:
- an area 41 intended for entering/displaying the data necessary for the calculation of the actual weight Gw (Figure 6); and
- an area 42 intended for entering/displaying the data necessary for the calculation of the velocity Vmax (Figure 7).

The area 41 in turn comprises (Figure 6):
- a plurality of fields 83 into which data can be entered;
- a plurality of read-only fields 84; and
- a field 85 to confirm the data entered.

The fields 83 allow the entry of data relative to the basic operating weight of the helicopter 1, the position of the basic centre of gravity of the helicopter 1, the weight of the crew, the weight of the equipment of the cockpit 11, the weight of the devices 15/kits 25 installed on the helicopter 1 and the weight of the baggage.

The fields 84 display the total weight of the fuel detected by the system 14, the actual weight GW of the helicopter 1, the position of the centre of gravity of the helicopter 1 and the velocity profile High_VNE, Medium_VNE, Low_VNE processed by the processing stage 48.

The field 85 allows the activation/deactivation of the signal CONFIRM STATUS.

In the case shown, the fields 83, 84, 85 are conformed like rectangles and are arranged according to a plurality of horizontal lines superimposed on each other.

The area 42 comprises (Figure 7), in turn:
- a plurality of selectively activatable or deactivatable fields 91, 92; and
- a pair of fields 93a, 93b wherein it is possible respectively to enter a value for the velocity Vmax custom and selectively activate or deactivate the functionality thereof.

The field 91 allows activating/deactivating the signal VMAX DISABLE.

The field 92 allows activating/deactivating the installation of respective devices 15/kits 25.

In the case shown, the fields 91, 92, 93a, 93b are conformed like rectangles and are arranged according to a plurality of horizontal lines superimposed on each other.

The operation of the helicopter 1 is described starting from an ignition condition. In this condition, the confirmation signal CONFIRM STATUS assumes FALSE value and the processing stage 48 of the processing system 46 selects the default velocity profile VNE_Low Profile.

The storage stage 52 acquires the AEO, OEI, Power off condition indicated by the system 36 and selects the corresponding table T1, .. Ti from the set S1, S2, .. Sj associated with the default velocity profile Vne_Low Profile.

The display device 51 displays:
- in the indication 61 the default value of velocity VNE; and
- the message CHECK GW-VNE.

The velocity VNE displayed in the indication 60 varies during operation of the helicopter 1, depending on the signals ALT, OAT detected by the sensors 30 and based on the signals AEO, OEI, Power off when the propulsion system 35 comprises at least two turbines 36 or on the signals AEO, Power off when the propulsion system 35 comprises only one turbine 36.

The display device 51 displays the velocity VNE on the indication 61.

Either in the case in which the helicopter 1 is on the ground or in the case in which the helicopter 1 is flying, the processing stage 48 of the processing system 46 continues to select the default velocity profile VNE_Low Profile until the crew activates the confirmation signal CONFIRM STATUS via the field 85 of the interface 40.

After activation, the signal CONFIRM STATUS assumes TRUE value.

In the case in which it is desired to initialise the calculation of the velocity VNE based on the actual weight GW, the crew enters the data relative to the basic operating weight BOW of the helicopter, the weights of the crew, the weights of the equipment installed in the cockpit, the weight of the baggage and the weight of the devices 15/kits 25 in the fields 83 of the area 41.

The processing stage 48 calculates the value of the actual weight GW based on the aforesaid data, and the velocity profile High_VNE, Medium_VNE, Low_VNE associated with this actual weight GW.

More particularly, the processing stage 48 updates the velocity profile High_VNE, Medium_VNE, Low_VNE, based on the respective interval I1, I2, .. , Ij associated with the actual weight GW.

The storage stage 52 associates a set S1, S2, .. Sj of tables T1, T2, .. , Ti to the updated velocity profile High_VNE, Medium_VNE, Low_VNE.

The storage stage 52 selects one of the tables T1, T2, .. , Ti of the set S1, S2.. Sn selected, based on the actual AEO, OEI, Power off condition detected by the control unit 37, and processes the value of velocity VNE from the table T1, T2, .. , Ti selected and based on the values of altitude ALT and outside temperature OAT detected by the sensors 30.

The processing stage 48 moreover processes the value of velocity Vmax associated with the devices 15/kits 25 installed on the helicopter 1 based on the data contained in the file 49 and on what the crew has entered in the interface 40.

In particular, the processing stage 48 processes as value of velocity Vmax the minimum value of the value of the velocity Vmax associated with respective devices 15/kits 25 installed on the helicopter 1 and with the relative operating conditions.

Preferably, the processing stage 48 is programmed to process as velocity Vmax the smaller between the aforesaid minimum value and the velocity Vmaxcustom. The interface 40 displays in the field 83 of the area 41 the actual weight GW of the helicopter 1 and the velocity profile High_VNE, Medium_VNE, Low_VNE processed by the processing stage 48.

The processing stage 48 enables the field 85 of the area 41.

The crew confirms via the field 85 the data entered via the fields 83 of the area 41.

The display device 51 displays the values of velocity VNE, Vmax respectively on the indications 60, 61 of the indicator 65.

During the mission and as a result of weight changes of the helicopter 1, the processing stage 48 continuously updates the value of the actual weight GW and the corresponding velocity profile High_VNE, Medium_VNE, Low_VNE.

The storage stage 52 continuously updates the set S1, S2, .. Sj of tables T1, T2, .. Ti associated with the updated velocity profile High_VNE, Medium_VNE, Low_VNE.

The storage stage 52 continuously updates the table T1, T2, .. Tn selected from the updated velocity profile High_VNE, Medium_VNE, Low_VNE, basicd on the actual AEO, OEI, Power off condition detected by the control unit 37.

The storage stage 52, moreover, continuously updates the velocity VNE selected from the table T1, T2, .. Tn selected, basicd on the values of altitude ALT and outside temperature OAT detected by the sensors 30.

When the sensor 16 detects that the helicopter 1 is on the ground, the processing stage 48 transmits the default profile Low_VNE to the display device 50, thus performing the reset cycle.

Otherwise, in the case in which the crew does not confirm via the field 85 the data entered via the fields 83 of the area 41, the signal CONFIRM STATUS continues to assume FALSE value.

The crew can enable the display of the velocity Vmax via the field 93b of the area 42 of the interface 40 and activate/deactivate the installation of the devices 15/kits 25 via the field 92 of the area 42 of the interface 40.

Finally, the crew can enter a value Vmax custom via the field 93a of the area 42 of the interface 40.

The processing system 46 acquires the data entered in the fields 92, 93a, 93b and evaluates the velocity Vmax based on the file 49 stored in the storage stage 47 and on the table Tx stored in the storage stage 47.

The processing system 46 displays on the indication 62 of the indicator 65 this value of velocity Vmax or the value Vmax custom if set and lower than the processed velocity Vmax.

In the case in which the VMAX DISABLE button is pressed in the field 92 of the area 42 of the interface 40, the processing system 48 interrupts the processing of the velocity Vmax.

The generator 55 generates inside the cockpit 11:
- a first acoustic alarm signal, if the actual velocity IAS of the helicopter 1 is greater than a predetermined rate of the velocity VNE; and
- a second acoustic alarm signal, if the actual velocity IAS of the helicopter 1 is greater than a predetermined rate of the velocity Vmax.

In particular, these predetermined rates could in turn be functions of the respective velocities VNE and Vmax.

With reference to Figure 8, 100' denotes a training system for a crew adapted to simulate the aerodynamic behaviour of a helicopter 1'.

The system 100' essentially comprises:
- a station 110' for a pilot to be trained;
- a plurality of simulated control devices 111', for example of the joystick or cloche type, which can be actuated by the pilot by means of the commands representative of simulated flight manoeuvres and conditions;
- a graphical interface 112', e.g. a screen, visible to the pilot and adapted to provide the pilot with a visual representation of the simulated flight;
- a plurality of flight simulation devices 113' adapted to create a simulated representation of the flight perceptible from the station 110'; and
- a processing unit 114' configured to receive at input the commands applied by the pilot to the control devices 111' and to generate at output command signals for the simulation devices 113' associated with the simulated aerodynamic loads to be generated on the station 110' .

The system 100' comprises, moreover, a processing system 46' entirely similar to the processing system 46. In particular, the processing system 46' comprises storage steps 44', 52' entirely similar to the storage steps 44, 52; and a processing stage 48' entirely similar to the processing stage 48, and a control unit 45' entirely similar to the control unit 45.

The processing system 46' is similar to the system 46 and will be described below only insofar as it differs from the latter; equal or equivalent parts of the systems 46, 46' will be marked, where possible, by the same reference numbers.

In greater detail, the processing system 46' differs from the processing system 46 in that it processes a simulated velocity to never exceed VNE', based on a signal GW' associated with the simulated weight of the helicopter 1 and on signals ALT', OAT' associated with simulated values OAT', ALT' of outside temperature and altitude.

The processing system 46' moreover differs from the processing system 46 in that it processes a simulated value of the quantity of fuel still available, based on the data entered on the interface 40' and on the commands applied to the control devices 111'.

Similarly, the processing system 46' differs from the processing system 46 in that it processes a value of simulated velocity Vmax' of the helicopter 1, based on a simulation of the installation of the devices 15/kits 25 and on the relative simulated operating conditions.

More particularly, the simulation devices 113' comprise:
- a plurality of actuators 115' adapted to exert the simulated aerodynamic loads on the station 110', which are determined by the flight manoeuvres and conditions simulated by the pilot through the control devices 111'; and
- a display device 116', which is adapted to display a simulated visual representation of the flight on the graphical interface 112'. This simulated visual representation determined by the flight manoeuvres and conditions simulated by the pilot by means of the control devices 111'.

In particular, the simulated graphical representation is obtained either as a simulation of the pilot's field of view or as a series of simulated flight indications provided to respective flight instruments displayed in the graphical interface 112'.

In particular, the graphical interface 112' comprises an interface 40' and a display system 50' only schematically shown in Figure 8.

The interface 40' and display system 50' are similar to the interface 40 and to the display system 50, respectively and will be described below only in so far as they differ from the latter; equal or equivalent parts of the interfaces 40, 40' and of the display systems 50, 50' will be marked, where possible, by the same reference numbers.

In particular, the interface 40' differs from the interface 40 in that it allows the crew to enter information and/or data simulated that are associated with the simulated weight GW' of the helicopter 1' and with the simulated operation of the helicopter 1' itself.

The display system 50' differs from the display system 50 in that it displays information and simulated flight parameters of the helicopter 1 on a display device 51' of the interface 112.

In particular, the display system 50' differs from the display system 50 in that it displays the simulated VNE' and simulated Vmax' velocity value.

The processing unit 114' comprises a storage step 117' wherein significant data of the rotors 3, 4 and of the helicopter 1 are stored.

The processing unit 114' is, moreover, programmed to generate simulated signals ALT', OAT', IAS', AEO', OEI', Power off', based on the commands applied by the pilot to the control devices 111'.

In use, the trainee pilot performs simulated flight manoeuvres by imparting simulated commands via the control devices 111'. These simulated commands simulate certain flight conditions, e.g. of the thrust values of the rotor 3, and of the flight manoeuvres, for example a low-altitude flight or hovering manoeuvre.

The processing unit 114' generates simulated signals ALT', OAT', IAS', AEO', OEI' and Power off' based on the simulated commands applied by the pilot to the control devices 111'.

The operation of the processing system 46', the interface 40', and the display system 50' is similar to the operation of the processing system 46, the interface 40, and the display system 50, respectively, and is described only insofar as it differs from it.

In particular, the operation of the processing system 46' differs from that of the processing system 46 in that:
- it processes a simulated velocity VNE', based on simulated signals ALT', OAT', AEO', OEI' and Power off'; and
- it processes a simulated velocity Vmax', based on a simulation of the installation of the devices 15/kits 25 and on relative simulated operating conditions.

The operation of the interface 40' differs from the interface 40 in that it allows the crew to enter information and/or data simulated that are associated with the simulated weight GW' of the helicopter 1' and with the simulated operation of the helicopter 1' itself.

The display system 50' differs from that of the display system 50 in that it displays information and simulated flight parameters of the helicopter 1 on a display device 51' of the interface 112'.

In particular, the display device 51' displays respectively the simulated VNE' and simulated Vmax' velocity value on the indications 60', 61' of the indicator 65' (not visible in Figure 8).

From an examination of the features of the control unit 45, 45'and the method for assisting the performance of a manoeuvre according to the present invention, the advantages it allows to be obtained are evident.

In particular, the control unit 45, 45' is programmed to receive at input a plurality of signals representative of respective actual or simulated conditions, of devices 15/kits 25 of the helicopter 1, 1'. The control unit 45, 45' moreover has in its memory a table TX wherein the values of actual or simulated velocity Vmax of the helicopter 1, 1' are stored as a function of respective actual or simulated conditions, of devices 15/kits 25 of the helicopter 1, 1' itself.

It is thus possible to evaluate and provide the crew with a clear indication of the minimum value of the velocities Vmax, Vmax' under the different operating conditions of the helicopter 1, 1' capable of hovering, in order to reduce the workload thereof.

The acoustic signal provided by the generator 55 gives the crew a clear acoustic indication that the actual or simulated velocity IAS, IAS' is approaching the minimum value of the velocity Vmax, Vmax'. This acoustic indication is useful if the crew is in an actual or simulated emergency manoeuvring condition in which the crew is unable to constantly maintain the attention on the indicator 65.

The indication 61 and/or the acoustic signal generated by the generator 55 can be selectively deactivated, allowing different actual or simulated configuration modes of the helicopter 1, 1' according to respective actual or simulated operating scenarios.

Finally, the simulation system 100 'provides the crew with a simulated evaluation of the velocity Vmax, allowing a simulation of the conditions that the crew will actually encounter on the helicopter 1'.

Finally, it is clear that modifications and variations can be made to the control unit 45, 45' and the method for assisting the performance of an actual or simulated manoeuvre for the helicopter 1 described above without thereby departing from the scope of protection of the present invention defined by the appended claims.

In particular, the aircraft 1 could be unmanned or be a drone.

The tables T1, T2, .., TX, .. , Tn could be stored within a storage step arranged in the control unit 45.

The file 49 could be stored in the display system 50, 50' instead of in the control unit 45, 45'.

The tables T1, T2, .., Tn could be associated with the respective intervals I1, I2, .. , Ij within the display system 50, 50' instead of in the control unit 45, 45'.

The actual weight GW, GW' could be processed within the display system 50, 50' instead of in the control unit 45.

The table T1, T2, .., Tn could be selected within the display device 50, 50'.

## Claims

1. Control unit (46, 46') for an aircraft (1, 1') capable of hovering or for a flight simulation system of said aircraft (1, 1'), said control unit (46, 46') being programmed to:
- receive at input at least one datum associated with equipment (15) and/or kits (25) actually or simulatedly installed on said aircraft (1, 1') and/or with the operating configuration of said equipment (15) and/or kits (25); the installation and/or the configuration of said equipment (15) and/or kits (25) causing, in use, a reduction in the maximum actual or simulated forward velocity of said aircraft (1, 1');
- store a table (TX) defining a correspondence between each said data and a respective value of a first signal (Vmax, Vmax') associated with a value of maximum actual or simulated forward velocity of said aircraft (1, 1');
- display the lowest of said first signals (Vmax, Vmax');
said control unit (46, 46') comprising:
- a processing stage (48, 48') programmed to acquire at input said plurality of data;
- a first storage stage (47, 47') wherein said table (TX) is stored and operationally connected to said processing stage (48, 48'); and
- a display stage (50, 51; 50', 51') programmed to command the display of said first signal (Vmax, Vmax') and commanded by said second storage stage (47, 47');
**characterized in that** it comprises a second storage stage (44, 44') programmed to store a file (49) containing said equipment (15) and/or kits (25) which are nominally installable in an actual or simulated manner on said aircraft (1, 1'); and **in that** it comprises an interface (40, 40') that is used to declare that some of said equipment (15) and/or kits (25) are absent;
said second storage stage (44, 44') being operatively connected with said interface (40, 40').

2. Control unit according to Claim 1, **characterized in that** it is programmed to receive in input a second signal (IAS, IAS') associated with the actual or simulated velocity (IAS, IAS') of said aircraft (1, 1').

3. Control unit according to Claim 2, **characterized in that** it is programmed to generate an acoustic signal associated with the fact that the actual or simulated velocity (IAS, IAS') of said aircraft (1, 1') is equal to a predetermined rate of said maximum actual or simulated forward velocity of said aircraft (1, 1').

4. Control unit according to Claim 3, **characterized in that** said acoustic signal is selectively deactivatable; and/or **characterized in that** it is programmable not to display said first signal (Vmax, Vmax').

5. Control unit according to any one of the preceding claims, **characterized in that** it is programmed to:
- receive at input a third signal (Vmax custom, Vmax custom') associated with a maximum actual or simulated forward velocity that is selectively settable; and
- display said third signal (Vmax custom, Vmax custom') in the case in which said third signal (Vmax custom, Vmax custom') is lower than the lowest of said second signals (Vmax, Vmax').

6. Control unit according to any one of the preceding claims, **characterized in that** it is programmed to receive at input at least a fourth signal associated with real or simulated flight parameters (ALT, OAT; ALT', OAT') of said aircraft (1, 1') and to provide at as output a fifth signal (Vne, Vne') associated with an actual or simulated forward velocity to never exceed of said aircraft (1, 1');
said control unit (45) being programmed to display said lowest of said first signals (Vmax, Vmax'), when the latter is lower than said fifth signal (Vne, Vne').

7. Aircraft (1) capable of hovering, comprising:
- a cockpit (11) comprising, in turn, a display device (51) on which said value of maximum velocity can be displayed; and
- a control unit (46) according to any one of the foregoing claims.

8. Aircraft according to Claim 7, **characterized in that** it comprises:
- saidn interface (40);
- a display device (50, 51) comprising said display stage (50, 51) and a second storage stage (52, 52'); and
- a control system of the aircraft (45) comprising said processing stage (48, 48') and said second storage stage (44).

9. Flight simulation system (100') for simulating the flight of an aircraft (1') capable of hovering, comprising:
- a station for a pilot (110') being trained;
- a display device (112'), on which said third simulated value of simulated maximum forward velocity (Vmax') can be displayed;
- at least one simulated control device (111') of said aircraft (1'), which can be actuated with a command simulated by said pilot to simulate a flight condition of said aircraft (1');
- simulation means (114') configured to generate a simulated representation of said flight condition perceptible to said pilot; and
- a control unit (46') according to any one of the foregoing claims.

10. Method for assisting the performance of an actual or simulated manoeuvre for an aircraft (1, 1') configured to be able of hovering, comprising the steps of:
i) receive at input at least one datum associated with equipment (15) and/or kits (25) actually or simulatedly installed on said aircraft (1, 1') and/or the operating configuration of said equipment (15) and/or kits (25);
the installation and/or the configuration of said equipment (15) and/or kits (25) causing, when in use, a reduction in the actual or simulated forward velocity of said aircraft (1, 1');
ii) store a table (TX) defining a correspondence between each said datum and a respective value of a first signal (Vmax, Vmax') associated with a value of maximum actual or simulated forward velocity of said aircraft (1, 1');
iii) display the lowest of said first signals (Vmax, Vmax');
iv) acquire at input a plurality of said data by means of a processing stage (48, 48');
v) storing said table (TX) in a first storage stage (47, 47') operationally connected to said processing stage (48, 48'); and
vi) display said first signal (Vmax, Vmax') in a display stage (50, 51; 50', 51') and commanded by said second storage stage (47, 47');
**characterized in that** it comprises the steps of:
vii) store in a second storage stage (44, 44') a file (49) containing said equipment (15) and/or kits (25) which are nominally installable in an actual or simulated manner on said aircraft (1, 1'); and
viii) declare that some of said equipment (15) and/or kits (25) are absent in an interface (40, 40') connected with said second storage stage (44, 44').

11. Method according to Claim 10, **characterized in that** it comprises the steps of:
ix) acquiring a second signal associated with the actual or simulated velocity (IAS, IAS') of said aircraft (1, 1'); and
x) generating an acoustic signal associated with the fact that the actual or simulated velocity (IAS, IAS') of said aircraft (1, 1') is equal to a predetermined rate of said first signal (Vmax, Vmax').

12. Method according to Claim 10 or 11, **characterized in that** it comprises the steps of:
xi) receiving at input a third signal (Vmax custom) associated with a maximum actual or simulated forward velocity that is selectively settable; and
xii) displaying said third signal (Vmax custom, Vmax custom') in the case in which said third signal (Vmax custom, Vmax custom') is lower than the lowest of said second signals (Vmax, Vmax').

## Patentansprüche

1. Steuereinheit (46, 46') für ein Luftfahrzeug (1, 1'), das schweben kann, oder für ein Flugsimulationssystem des Luftfahrzeugs (1, 1'), wobei die Steuereinheit (46, 46') programmiert ist zum:
- Empfangen an einem Eingang mindestens eines Datums, das Geräten (15) und/oder Kits (25), die am Luftfahrzeug (1, 1') tatsächlich oder simuliert installiert sind, und/oder der Betriebskonfiguration der Geräte (15) und/oder der Kits (25) zugeordnet ist; wobei die Installation und/oder die Konfiguration der Geräte (15) und/oder der Kits (25) im Betrieb eine Verringerung der maximalen tatsächlichen oder simulierten Vorwärtsgeschwindigkeit des Luftfahrzeugs (1, 1') verursachen;
- Speichern einer Tabelle (TX), die eine Entsprechung zwischen jedem der Daten und einem jeweiligen Wert eines ersten Signals (Vmax, Vmax'), das einem Wert einer maximalen tatsächlichen oder simulierten Vorwärtsgeschwindigkeit des Luftfahrzeugs (1, 1') zugeordnet ist, definiert; und
- Anzeigen des niedrigsten der ersten Signale (Vmax, Vmax'); wobei
die Steuereinheit (46, 46') Folgendes umfasst:
- eine Verarbeitungsstufe (48, 48'), die programmiert ist, an einem Eingang die mehreren Daten zu erfassen;
- eine erste Speicherstufe (47, 47'), in der die Tabelle (TX) gespeichert ist und die mit der Verarbeitungsstufe (48, 48') betriebstechnisch verbunden ist; und
- eine Anzeigevorrichtungsstufe (50, 51; 50', 51'), die programmiert ist, das Anzeigen des ersten Signals (Vmax, Vmax') anzuweisen und durch die zweite Speicherstufe (47, 47') angewiesen wird;
**gekennzeichnet durch** eine zweite Speicherstufe (44, 44'), die programmiert ist, eine Datei (49) zu speichern, die die Geräte (15) und/oder die Kits (25) enthält, die in einer tatsächlichen oder einer simulierten Weise am Luftfahrzeug (1, 1') nominell installierbar sind; und eine Schnittstelle (40, 40'), die verwendet wird, um bekanntzugeben, dass ein Teil der Geräte (15) und/oder der Kits (25) nicht vorhanden ist; wobei
die zweite Speicherstufe (44, 44') mit der Schnittstelle (40, 40') betriebstechnisch verbunden ist.

2. Steuereinheit nach Anspruch 1, **gekennzeichnet durch** eine Programmierung, um an einem Eingang ein zweites Signal (IAS, IAS') zu empfangen, das der tatsächlichen oder der simulierten Geschwindigkeit (IAS, IAS') des Luftfahrzeugs (1, 1') zugeordnet ist.

3. Steuereinheit nach Anspruch 2, **gekennzeichnet durch** eine Programmierung, um ein akustisches Signal zu erzeugen, das der Tatsache zugeordnet ist, dass die tatsächliche oder die simulierte Geschwindigkeit (IAS, IAS') des Luftfahrzeugs (1, 1') gleich einem vorgegebenen Maß der maximalen tatsächlichen oder simulierten Vorwärtsgeschwindigkeit des Luftfahrzeugs (1, 1') ist.

4. Steuereinheit nach Anspruch 3, **dadurch gekennzeichnet, dass** das akustische Signal wahlweise deaktivierbar ist; und/oder **dadurch gekennzeichnet, dass** sie programmierbar ist, das erste Signal (Vmax, Vmax') nicht anzuzeigen.

5. Steuereinheit nach einem der vorhergehenden Ansprüche, **gekennzeichnet durch** eine Programmierung zum:
- Empfangen an einem Eingang eines dritten Signals (Vmax custom, Vmax custom'), das einer maximalen tatsächlichen oder simulierten Vorwärtsgeschwindigkeit zugeordnet ist, die wahlweise einstellbar ist; und
- Anzeigen des dritten Signals (Vmax custom, Vmax custom'), falls das dritte Signal (Vmax custom, Vmax custom') niedriger als das niedrigste der zweiten Signale (Vmax, Vmax') ist.

6. Steuereinheit nach einem der vorhergehenden Ansprüche, **gekennzeichnet durch** eine Programmierung, um an einem Eingang mindestens ein viertes Signal zu empfangen, das realen oder simulierten Flugparametern (ALT, OAT; ALT', OAT') des Luftfahrzeugs (1, 1') zugeordnet ist, und als Ausgabe ein fünftes Signal (Vne, Vne') zu liefern, das einer tatsächlichen oder einer simulierten nie zu überschreitenden Vorwärtsgeschwindigkeit des Luftfahrzeugs (1, 1') zugeordnet ist; wobei
die Steuereinheit (45) programmiert ist, das niedrigste der ersten Signale (Vmax, Vmax') anzuzeigen, wenn das letztgenannte niedriger als das fünfte Signal (Vne, Vne') ist.

7. Luftfahrzeug (1), das schweben kann und das Folgendes umfasst:
- ein Cockpit (11), das wiederum eine Anzeigevorrichtung (51) umfasst, an der der Wert einer Maximalgeschwindigkeit angezeigt werden kann; und
- eine Steuereinheit (46) nach einem der vorhergehenden Ansprüche.

8. Luftfahrzeug nach Anspruch 7, **gekennzeichnet durch**
- die Schnittstelle (40);
- eine Anzeigevorrichtung (50, 51), die die Anzeigevorrichtungsstufe (50, 51) und eine zweite Speicherstufe (52, 52') umfasst; und
- ein Steuersystem des Luftfahrzeugs (45), das die Verarbeitungsstufe (48, 48') und die zweite Speicherstufe (44) umfasst.

9. Flugsimulationssystem (100') zum Simulieren des Flugs eines Luftfahrzeugs (1'), das schweben kann, das Folgendes umfasst:
- eine Station für einen Piloten (110'), der geschult wird;
- eine Anzeigevorrichtung (112'), an der der dritte simulierte Wert einer simulierten maximalen Vorwärtsgeschwindigkeit (Vmax') angezeigt werden kann;
- mindestens eine simulierte Steuervorrichtung (111') des Luftfahrzeugs (1'), die mit einer Anweisung betätigt werden kann, die durch den Piloten simuliert wird, um einen Flugzustand des Luftfahrzeugs (1') zu simulieren;
- Simulationsmittel (114'), die konfiguriert sind, eine simulierte Repräsentation des Flugzustands zu erzeugen, die für den Piloten wahrnehmbar ist; und
- eine Steuereinheit (46') nach einem der vorhergehenden Ansprüche.

10. Verfahren zum Unterstützen der Leistungsfähigkeit eines tatsächlichen oder eines simulierten Manövers für ein Luftfahrzeug (1, 1'), das konfiguriert ist, schweben zu können, das die folgenden Schritte umfasst:
i) Empfangen an einem Eingang mindestens eines Datums, das Geräten (15) und/oder Kits (25), die am Luftfahrzeug (1, 1') tatsächlich oder simuliert installiert sind, und/oder der Betriebskonfiguration des Geräts (15) und/oder der Kits (25) zugeordnet ist; wobei
die Installation und/oder die Konfiguration der Geräte (15) und/oder der Kits (25) im Betrieb eine Verringerung der tatsächlichen oder der simulierten Vorwärtsgeschwindigkeit des Luftfahrzeugs (1, 1') verursachen;
ii) Speichern einer Tabelle (TX), die eine Entsprechung zwischen jedem der Daten und einem jeweiligen Wert eines ersten Signals (Vmax, Vmax'), das einem Wert einer maximalen tatsächlichen oder simulierten Vorwärtsgeschwindigkeit des Luftfahrzeugs (1, 1') zugeordnet ist, definiert;
iii) Anzeigen des niedrigsten der ersten Signale (Vmax, Vmax');
iv) Erfassen an einem Eingang mehrerer Daten mittels einer Verarbeitungsstufe (48, 48');
v) Speichern der Tabelle (TX) in einer ersten Speicherstufe (47, 47'), die mit der Verarbeitungsstufe (48, 48') betrieblich verbunden ist; und
vi) Anzeigen des ersten Signals (Vmax, Vmax') in einer Anzeigevorrichtungsstufe (50, 51; 50', 51') und angewiesen durch die zweite Speicherstufe (47, 47');
**gekennzeichnet durch** die folgenden Schritte:
vii) Speichern in einer zweiten Speicherstufe (44, 44') einer Datei (49), die die Geräte (15) und/oder die Kits (25) enthält, die in einer tatsächlichen oder einer simulierten Weise am Luftfahrzeug (1, 1') nominell installierbar sind; und
viii) Bekanntgeben, dass ein Teil der Geräte (15) und/oder der Kits (25) nicht vorhanden ist, in einer Schnittstelle (40, 40'), die mit der zweiten Speicherstufe (44, 44') verbunden ist.

11. Verfahren nach Anspruch 10, **gekennzeichnet durch** die folgenden Schritte:
ix) Erfassen eines zweiten Signals, das der tatsächlichen oder der simulierten Geschwindigkeit (IAS, IAS') des Luftfahrzeugs (1, 1') zugeordnet ist; und
x) Erzeugen eines akustischen Signals, das der Tatsache zugeordnet ist, dass die tatsächliche oder die simulierte Geschwindigkeit (IAS, IAS') des Luftfahrzeugs (1, 1') gleich einem vorgegebenen Maß des ersten Signals (Vmax, Vmax') ist.

12. Verfahren nach Anspruch 10 oder 11, **gekennzeichnet durch** die folgenden Schritte:
xi) Empfangen an einem Eingang eines dritten Signals (Vmax custom), das einer maximalen tatsächlichen oder simulierten Vorwärtsgeschwindigkeit zugeordnet ist, die wahlweise einstellbar ist; und
xii) Anzeigen des dritten Signals (Vmax custom, Vmax custom'), falls das dritte Signal (Vmax custom, Vmax custom') niedriger als das niedrigste der zweiten Signale (Vmax, Vmax') ist.

## Revendications

1. Unité de commande (46, 46') pour un aéronef (1, 1') capable de vol stationnaire ou pour un système de simulation de vol dudit aéronef (1, 1'), ladite unité de commande (46, 46') étant programmée pour :
- recevoir en entrée au moins une donnée associée à un équipement (15) et/ou à des panoplies (25) installés de manière effective ou simulée sur ledit aéronef (1, 1') et/ou à la configuration opérationnelle dudit équipement (15) et/ou desdites panoplies (25) ; l'installation et/ou la configuration dudit équipement (15) et/ou desdites panoplies (25) provoquant, en cours d'utilisation, une réduction de la vitesse d'avancement effective ou simulée maximale, dudit aéronef (1, 1') ;
- stocker un tableau (TX) définissant une correspondance entre chacune desdites données et une valeur respective d'un premier signal (Vmax, Vmax') associé à une valeur d'une vitesse d'avancement effective ou simulée maximale dudit aéronef (1, 1') ;
- afficher le plus faible desdits premiers signaux (Vmax, Vmax') ;
ladite unité de commande (46, 46') comprenant :
- un étage de traitement (48, 48') programmé pour acquérir en entrée ladite pluralité de données ;
- un premier étage de stockage (47, 47'), dans laquelle ledit tableau (TX) est stocké et connecté de manière opérationnelle audit étage de traitement (48, 48') ; et
- un étage d'affichage (50, 51 ; 50', 51') programmé pour diriger l'affichage dudit premier signal (Vmax, Vmax') et dirigé par ledit deuxième étage de stockage (47, 47') ;
**caractérisée en ce qu'**elle comprend un deuxième étage de stockage (44, 44') programmé pour stocker un fichier (49) contenant ledit équipement (15) et/ou lesdites panoplies (25) qui peuvent être nominalement installés de manière effective ou simulée sur ledit aéronef (1, 1') ; et **en ce qu'**elle comprend une interface (40, 40') qui est utilisée pour déclarer que certains desdits équipement (15) et/ou panoplies (25) sont absents ;
ledit deuxième étage de stockage (44, 44') étant connecté de manière opérationnelle à ladite interface (40, 40').

2. Unité de commande selon la revendication 1, **caractérisée en ce qu'**elle est programmée pour recevoir en entrée un deuxième signal (IAS, IAS') associé à la vitesse effective ou simulée (IAS, IAS') dudit aéronef (1, 1').

3. Unité de commande selon la revendication 2, **caractérisée en ce qu'**elle est programmée pour générer un signal acoustique associé au fait que la vitesse effective ou simulée (IAS, IAS') dudit aéronef (1, 1') est égale à un taux prédéterminé de ladite vitesse d'avancement effective ou simulée maximale dudit aéronef (1, 1').

4. Unité de commande selon la revendication 3, **caractérisée en ce que** ledit signal acoustique peut être désactivé sélectivement ; et/ou **caractérisée en ce qu'**elle est programmable pour ne pas afficher ledit premier signal (Vmax, Vmax').

5. Unité de commande selon l'une quelconque des revendications précédentes, **caractérisée en ce qu'**elle est programmée pour :
- recevoir en entrée un troisième signal (Vmax custom, Vmax custom') associé à une vitesse d'avancement effective ou simulée maximale qui est réglable sélectivement ; et
- afficher ledit troisième signal (Vmax custom, Vmax custom') dans le cas où ledit troisième signal (Vmax custom, Vmax custom') est inférieur au plus faible desdits deuxièmes signaux (Vmax, Vmax').

6. Unité de commande selon l'une quelconque des revendications précédentes, **caractérisée en ce qu'**elle est programmée pour recevoir en entrée au moins un quatrième signal associé à des paramètres de vol réels ou simulés (ALT, OAT ; ALT', OAT') dudit aéronef (1, 1') et pour fournir en sortie un cinquième signal (Vne, Vne') associé à une vitesse d'avancement effective ou simulée dudit aéronef (1, 1') à ne jamais dépasser ;
ladite unité de commande (45) étant programmée pour afficher ledit plus faible desdits premiers signaux (Vmax, Vmax') lorsque ce dernier est inférieur audit cinquième signal (Vne, Vne').

7. Aéronef (1) capable de vol stationnaire, comprenant :
- un poste de pilotage (11) comprenant à son tour un dispositif d'affichage (51) sur lequel ladite valeur d'une vitesse maximale peut être affichée ; et
- une unité de commande (46) selon l'une quelconque des revendications précédentes.

8. Aéronef selon la revendication 7, **caractérisé en ce qu'**il comprend :
- ladite interface (40) ;
- un dispositif d'affichage (50, 51) comprenant ledit étage d'affichage (50, 51) et un deuxième étage de stockage (52, 52') ; et
- un système de commande de l'aéronef (45) comprenant ledit étage de traitement (48, 48') et ledit deuxième étage de stockage (44).

9. Système de simulation de vol (100') pour simuler le vol d'un aéronef (1') capable de vol stationnaire, comprenant :
- une station pour un pilote (110') en formation ;
- un dispositif d'affichage (112') sur lequel ladite troisième valeur simulée d'une vitesse d'avancement maximale simulée (Vmax') peut être affichée ;
- au moins un dispositif de commande simulé (111') dudit aéronef (1'), qui peut être actionné par une instruction simulée par ledit pilote pour simuler une condition de vol dudit aéronef (1') ;
- des moyens de simulation (114') configurés pour générer une représentation simulée de ladite condition de vol perceptible par ledit pilote ; et
- une unité de commande (46') selon l'une quelconque des revendications précédentes.

10. Procédé d'aide à l'exécution d'une manœuvre effective ou simulée pour un aéronef (1, 1') configuré pour pouvoir voler en stationnaire, comprenant les étapes suivantes :
i) recevoir en entrée au moins une donnée associée à un équipement (15) et/ou à des panoplies (25) installés de manière effective ou simulée sur ledit aéronef (1, 1') et/ou la configuration opérationnelle dudit équipement (15) et/ou desdites panoplies (25) ;
l'installation et/ou la configuration dudit équipement (15) et/ou desdites panoplies (25) provoquant, lorsqu'ils sont en cours d'utilisation, une réduction de la vitesse d'avancement effective ou simulée dudit aéronef (1, 1') ;
ii) stocker un tableau (TX) définissant une correspondance entre chacune desdites données et une valeur respective d'un premier signal (Vmax, Vmax') associé à une valeur d'une vitesse d'avancement effective ou simulée maximale dudit aéronef (1, 1') ;
iii) afficher le plus faible desdits premiers signaux (Vmax, Vmax') ;
iv) acquérir en entrée une pluralité desdites données au moyen d'un étage de traitement (48, 48') ;
v) stocker ledit tableau (TX) dans un premier étage de stockage (47, 47') connecté de manière opérationnelle audit étage de traitement (48, 48') ; et
vi) afficher ledit premier signal (Vmax, Vmax') dans un étage d'affichage (50, 51 ; 50', 51') et dirigé par ledit deuxième étage de stockage (47, 47') ;
**caractérisé en ce qu'**il comprend les étapes suivantes :
vii) stocker dans un deuxième étage de stockage (44, 44') un fichier (49) contenant ledit équipement (15) et/ou lesdites panoplies (25) qui peuvent être nominalement installés de manière effective ou simulée sur ledit aéronef (1, 1') ; et
viii) déclarer que certains desdits équipement (15) et/ou panoplies (25) sont absents dans une interface (40, 40') connectée audit deuxième étage de stockage (44, 44').

11. Procédé selon la revendication 10, **caractérisé en ce qu'**il comprend les étapes suivantes :
ix) acquérir un deuxième signal associé à la vitesse effective ou simulée (IAS, IAS') dudit aéronef (1, 1') ; et
x) générer un signal acoustique associé au fait que la vitesse effective ou simulée (IAS, IAS') dudit aéronef (1, 1') est égale à un taux prédéterminé dudit premier signal (Vmax, Vmax').

12. Procédé selon la revendication 10 ou 11, **caractérisé en ce qu'**il comprend les étapes suivantes :
xi) recevoir en entrée un troisième signal (Vmax custom) associé à une vitesse d'avancement effective ou simulée maximale qui est réglable sélectivement ; et
xii) afficher ledit troisième signal (Vmax custom, Vmax custom') dans le cas où ledit troisième signal (Vmax custom, Vmax custom') est inférieur au plus faible desdits deuxièmes signaux (Vmax, Vmax').
